# EUROPEAN PATENT APPLICATION

(11) **EP 2 234 381 A1**
(43) Date of publication of application: **29.09.2010**
(21) Application number: 08870918.3
(22) Date of filing: 25.12.2008
(51) Int. Cl.: H04M 7/00

(54) **A METHOD, SYSTEM AND DEVICE OF SELECTING CALL MEDIATION NODE BY SOFT SWITCH DEVICE**

(30) Priority: 27.12.2007 CN 200710301458
(71) Applicant: Huawei Technologies Co., Ltd., Longgang District, Shenzhen Guangdong 518129 (CN)
(72) Inventor: LI, Xiaojin, Longgang District 518129 Shenzhen (CN)
(74) Representative: Kreuz, Georg Maria
(86) International application number: PCT/CN2008/073717
(87) International publication number: WO 2009/089723

(57) **Abstract**

A method of selecting a call mediation node (CMN) by a soft switch device is provided. The method includes: receiving codec information; determining whether the codec information is included in a codec intersection of a forward office and a backward office; and selecting a CMN manner for processing, if the codec information is included in the intersection. A system and a device of selecting a CMN by a soft switch device are also provided. For a cross-domain call in the same operator, at the interworking node of the CS domain and the IMS/NGN network, the interworking MSC server applies the CMN manner, if a common codec is negotiated by the CS domain and the IMS/NGN network, so as to improve the call connection speed greatly, and increase the processing capacity of the device.

## Description

The application claims the benefit of priority to China Patent Application No. 200710301458.0, filed on December 27, 2007 and titled "METHOD, SYSTEM AND DEVICE OF SELECTING CALL MEDIATION NODE BY SOFT SWITCH DEVICE", which is incorporated herein by reference in its entirety.

### FIELD OF THE TECHNOLOGY

The present invention relates to the field of communication technology, and more particularly to a method, a system, and a device of selecting a call mediation node (CMN) by a soft switch device.

### BACKGROUND OF THE INVENTION

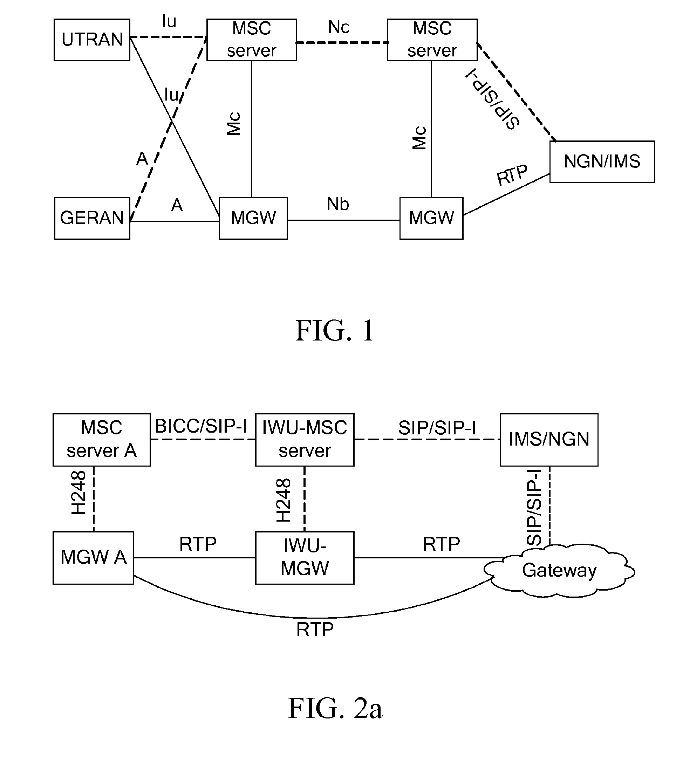

In the core network R4 architecture of wideband code division multiple address (WCDMA), the architecture that bearers are separated from control is introduced, so that Nc interface, Nb interface, and Mc interface are introduced, and various interfaces of the R4 networking architecture are as shown in FIG. 1. The universal mobile telecommunications system terrestrial radio access network (UTRAN) and the mobile switching center (MSC) server have an Iu interface there-between, and the UTRAN and the media gateway (MGW) have an Iu interface there-between. The global system for mobile communication/enhanced data rates for global evolution radio access network (GERAN) and the MSC server have an A interface there-between, and the GERAN and the MGW have an A interface there-between. The MSC server and the MGW have an Mc interface there-between. The MSC server and the MSC server have an Nc interface there-between. The MGW and the MGW have an Nb interface there-between. The MSC server and the next generation network (NGN)/IP multimedia subsystem (IMS) have a session initial protocol (SIP)/SIP with encapsulated ISUP (SIP-I) interface there-between. The MGW and the NGN/IMS have a real-time transport protocol (RTP) interface there-between.

The SIP-I is introduced into the 3rd generation partnership project (3GPP) TR 29.802 protocol to serve as the Nc interface protocol, so that an interworking scenario between a circuit switch (CS) domain and an NGN/IMS network inevitably exist. With the evolution of the network and the reassemble and development of the operator networks, one operator probably operates a plurality of networks at the same time, such as a CS domain, an NGN network, and an IMS network.

However, the CMN manner cannot be adopted in the cross-domain interworking in the prior art, but merely the control gateway can be adopted. When call connection is realized by adopting the control gateway, the speech quality effect is rather poor, and the IP resources in the network are wasted, thereby resulting in an IP network delay, and decreasing the processing capability of an interworking MSC server.

### SUMMARY OF THE INVENTION

The present invention is directed to a method, a system, and a device of selecting a call mediation node (CMN) by a soft switch device, which are applicable to select a CMN according to a codec negotiation result during a cross-domain call.

According to a first aspect, the present invention provides a method of selecting CMN by a soft switch device, which includes the following steps.

Codec information is received.

It is determined whether the codec information is included in a codec intersection of a forward office and a backward office. If the codec information is included in the intersection, the CMN is selected for processing.

According to a second aspect, the present invention provides a system of selecting CMN by a soft switch device, which includes a forward office and a backward office, and further includes an interworking MSC server.

The interworking MSC server is adapted to receive codec information and determine whether the codec information is included in a codec intersection of the forward office and the backward office. If the codec information is included in the intersection, the CMN is selected for processing.

According to a third aspect, the present invention provides a soft switch device, which includes a receiving unit, a determining unit, a processing unit, and an intersection acquiring unit.

The receiving unit is adapted to receive codec information from an SIP side or a bearer independent call control (BICC) side.

The determining unit is adapted to determine whether the codec information is included in a codec intersection from the SIP side or the BICC side.

The processing unit is adapted to select a CMN for processing when the codec information is included in the codec intersection from the SIP side or the BICC side.

The intersection acquiring unit is adapted to acquire a codec of a CS domain at the BICC side, acquire a codec of an IMS/NGN domain at the SIP side, and take an intersection of the two codecs to serve as codec intersection information.

According to the present invention, as for a cross-domain call in the same operator, at an interworking node of the CS domain and the IMS/NGN network, if a common codec is negotiated by the CS domain and the IMS/NGN network, the interworking MSC server adopts the CMN manner, such that the effect of the speech quality is improved, the IP resource in the network is saved, and the IP network delay is reduced, so that the processing capacity of the interworking MSC server is improved.

### BRIEF DESCRIPTION OF THE DRAWINGS

FIG. 1 is a schematic view of a logic architecture of a core network R4 network in the prior art;
FIG. 2a is a schematic view of an interworking model of a CS domain and an IMS/NGN in the prior art;
FIG. 2b is a schematic view of another interworking model of a CS domain and an IMS/NGN in the prior art;
FIG. 3 is a flow chart of selecting CMN by an interworking MSC server in a scenario of a BICC forward rapid incoming and an SIP outgoing according to an embodiment of the present invention;
FIG. 4 is a flow chart of selecting CMN by an interworking MSC server in a scenario of a BICC forward delay incoming and an SIP outgoing according to an embodiment of the present invention;
FIG. 5 is a flow chart of selecting CMN by an interworking MSC server in a scenario of an SIP carrying Session Description Protocol (SDP) for incoming and a BICC adopting forward rapid outgoing according to an embodiment of the present invention;
FIG. 6 is a flow chart of selecting CMN by an interworking MSC server in a scenario of an SIP carrying SDP for incoming and a BICC adopting forward delay outgoing according to an embodiment of the present invention;
FIG. 7 is a flow chart of selecting CMN by an interworking MSC server in a scenario that an outgoing side SIP completes negotiation in INVITE and 200 messages and an unreliable 18x message does not carry SDP information according to an embodiment of the present invention; and
FIG. 8 is a structural view of a system of selecting CMN by an interworking MSC server according to an embodiment of the present invention.

### DETAILED DESCRIPTION OF THE EMBODIMENTS

Hereinafter, the present invention is described in detail with reference to the specific embodiments.

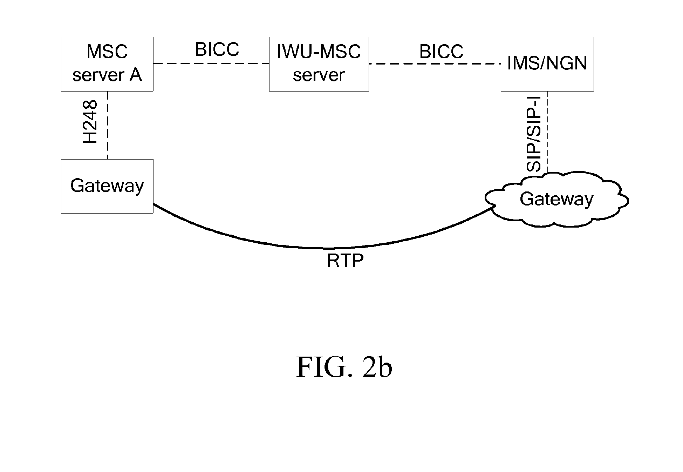

In the prior art, an interworking model of a CS domain and an IMS/NGN domain is shown in FIG. 2a. An interworking unit (IWU)-MSC server (briefly called an interworking MSC server) is a logic entity for realizing interworking between the CS domain and the IMS/NGN network. Currently, the operators have gradually evolved towards IP, and in order to exert the advantages of the R4 architecture that bearers are separated from control and reduce an IP network delay, it is required to change the circumstance that the CMN manner is merely adopted in the BICC network, and introduce the CMN manner to the network node for performing a cross-domain call (for example, interworking between a CS domain supporting BICC and a domain supporting SIP such as an IMS/NGN domain). As shown in FIG. 2b, a media stream of the Nb interface does not pass through the IWU-MGW, the speech interworking between an MSC server A and the IMS/NGN network is directly realized, and meanwhile, the processing capability of the interworking MSC server is improved significantly.

In an embodiment of the present invention, when the interworking is performed between a BICC/SIP-I and an SIP-I/SIP of the IMS/NGN network at the Nc interface, the deployment of the codec types supported by the two networks may be different, and meanwhile, in order to increase the call completion rate, the interworking MSC server carries the codec capacity supported by the interworking MSC server itself for outgoing as much as possible, so as to increase the probability of the successful codec negotiation. During the codec negotiation, if the finally negotiated primary codec is in the codec intersection of the CS domain and the IMS/NGN network, the MSC server adopts the CMN manner to perform call connection, and otherwise, the MSC server adopts the control gateway manner to perform the call connection. In the embodiments of the present invention, based on the Q.1912.5 protocol, according to the bearer establishment mode of the BICC (including forward rapid, forward delay, backward delay, and the like) and the media negotiation mode of the SIP, how a soft switch device (for example, an interworking MSC server) selects whether to adopt the CMN manner according to a codec negotiation result is described in different scenarios, and meanwhile, the implementation of the CMN selecting process is specified. Furthermore, as the SIP-1 at the Nc interface generally supports 100Rel, the scenario that the Nc interface does not support 100Re1 is not considered. In a scenario of a BICC incoming and an SIP outgoing, the CMN in the scenario that the negotiation is completed in the INVITE and 200 messages is not considered. That is because the control gateway mode is adopted in such a scenario. The INVITE messages sent and received at the interworking MSC carry SDP information.

Hereinafter, a forward office and a backward office in the process of the embodiments of the present invention are associated with the message transmission direction, that is, a device in a source direction of the message is called a backward office, and a target device where the message is forwarded is called as a forward office.

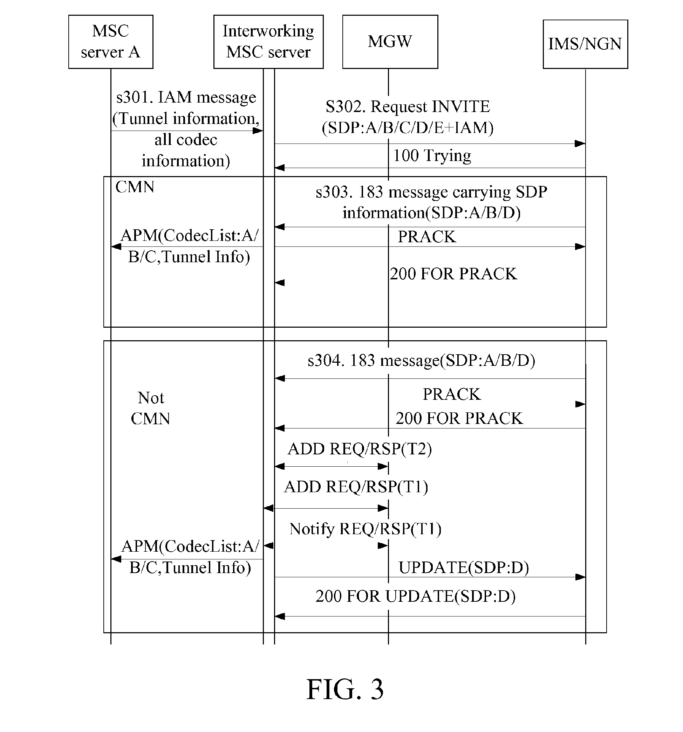

In a first embodiment of the present invention, in a scenario of a BICC forward rapid incoming and an SIP outgoing, as shown in FIG. 3, the method of selecting CMN by an interworking MSC server includes the following steps.

In Step s301, an interworking MSC server receives an IAM message sent by an MSC server A at an incoming BICC side. The IAM message carries Tunnel information and all codec information.

In Step s302, the interworking MSC server converts the Tunnel information and all the codec information of the incoming BICC side into SDP information, and sends the SDP information to an IMS/NGN network (forward office) through an INVITE message. The codec information refers to a codec formed by taking a union of the intersection of the codec of the incoming side and the codec supported by this office with the codec supported by this office and then placing the intersection at the front part in the union. For example, it is assumed that the backward office (MSC) supports A/C/B, but this office MSC (IWU-MSC) supports B/C/D, so that the intersection thereof is C/B, and then the union is taken, and the intersection is placed in the front part in the union, so as to get the codec of C/B/D (including the order).

In Step s303, the interworking MSC server receives a reliable 183 message carrying an SDP ANSWER from the IMS/NGN network (considering an unreliable 183 message carrying SDP information, an UPDATE message cannot be sent before the call is answered, and a Re-INVITE message needs to be sent to initiate re-negotiation after the call is answered, the same below), and the interworking MSC server determines whether the primary codec in the SDP ANSWER 183 message is included in the codec intersection supported by the CS domain and the IMS/NGN network (the interworking MSC server acquires the codec intersection in advance, that is, the codec of the CS domain at the CS domain side is acquired, the codec of the IMS/NGN domain at the IMS/NGN side is acquired, and the intersection of the two codecs is taken to get the codec intersection information, and the codec intersection information is stored in the interworking MSC server), in which it is assumed that the primary codec carried in the 183 message is B, and is included in the intersection (A/B) of the CS domain and the IMS/NGN domain. If the primary codec in the SDP ANSWER 183 message is included in the intersection, no bearer resource is applied for, and the CMN manner is selected for processing, and the codec intersection is sent to the MSC server A through an application transport message (APM). If the primary codec in the SDP ANSWER 183 message is not included in the codec intersection supported by the CS domain and the IMS/NGN network, it turns to Step s304 for processing.

In Step s304, an SIP side of the interworking MSC server applies for creating a bearer resource according to the codec negotiated by the IMS/NGN domain, and a BICC side selects a codec according to the codec information carried during the incoming or a strategy of this office and applies for a bear resource. Specifically, the interworking MSC server sends the SDP information carried in the 183 message to an MGW through an ADD REQ/RSP (T2) message when applying to the MGW for creating an endpoint T2, and after the endpoint T2 is created successfully, sends an UPDATE message to the IMS/NGN, in which the message carries information of the endpoint T2 (i.e., the SDP information). Meanwhile, as the codec negotiated by the IMS/NGN side is not included in the intersection, the BICC selects the codec information carried during the incoming or selects the codec according to the strategy of the MSC server itself, and applies to the MGW for creating an endpoint T1 through an ADD REQ/RSP (T1) message, and after the endpoint T1 is created successfully, that is, after receiving a Nofity REQ/RSP (T1) message, sends an APM message carrying the codec information to the MSC server A (backward office).

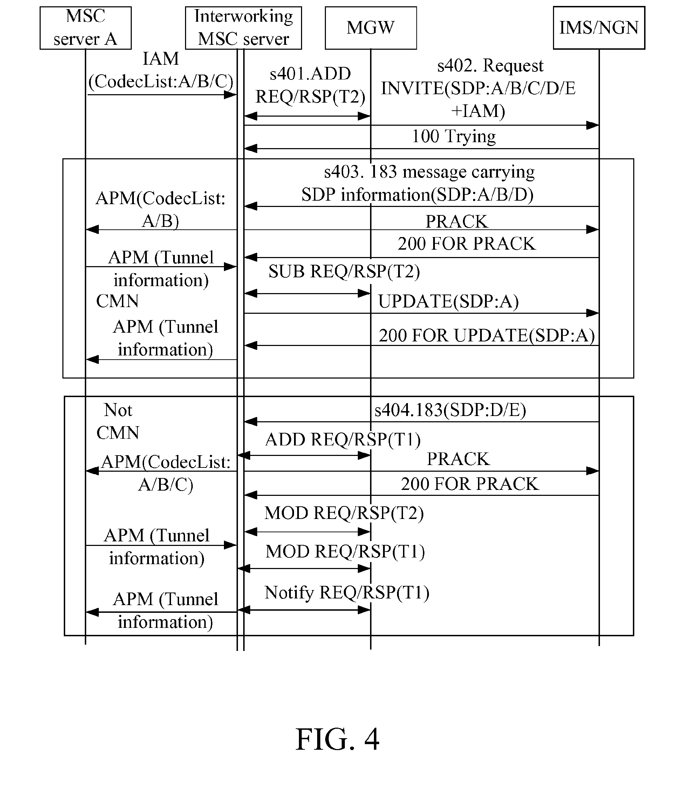

In a second embodiment of the present invention, in a scenario of a BICC forward delay incoming and an SIP outgoing, as shown in FIG. 4, the method of selecting CMN by an interworking MSC server includes the following steps.

In Step s401, an SIP side of the interworking MSC server firstly creates a bearer resource, and applies to an MGW for creating an endpoint T2 through an ADD REQ/RSP (T2) message.

In Step s402, the SIP side of the interworking MSC server converts information of the endpoint T2 and codec information into an SDP OFFER, and sends the SDP OFFER for outgoing through an INVITE message.

In Step s403, the interworking MSC server receives a reliable 183 message carrying an SDP ANSWER (including an unreliable 183 message carrying SDP information) from an IMS/NGN network. The interworking MSC server determines whether a primary codec in the message is included in a codec intersection supported by the CS domain and the IMS/NGN. If the primary codec is not included in the intersection, it turns to Step s404 for processing. If the primary codec is included in the intersection, the previously created bearer resource is released, and the CMN manner is adopted. That is, the MSC server takes an intersection of the codec carried in the 183 message and the codec received during the incoming, and sends the codec intersection to an MSC server A (backward office) through an APM message, and meanwhile, applies to the MGW for deleting the previously created endpoint T2 through a SUB REQ/RSP (T2) message. The interworking MSC server receives Tunnel information in the APM message sent by the backward office, and then converts the Tunnel information into SDP information, and sends the SDP information to the IMS/NGN through an UPDATE message, in which the codec carried in the message is the previously negotiated primary codec. The interworking MSC server receives a 200 response message of the UPDATE from the IMS/NGN (forward office), and then converts SDP ANSWER carried in the 200 message into Tunnel information, and sends the Tunnel information to the MSC server A (backward office) through an APM message of a BICC side.

In Step s404, the interworking MSC server sends the SDP information carried in the 183 message to the MGW through a MOD REQ/RSP (T2) message to modify properties of the endpoint T2. At the BICC side, as the codec negotiated by the IMS/NGN side is not included in the intersection, the BICC selects the codec information carried during the incoming or selects a codec according to a strategy of the MSC server of this office, and applies to the MGW for creating an endpoint T1 through an ADD REQ/RSP (T1) message. After the endpoint T1 is created successfully, the BICC sends the APM message carrying the codec information to the MSC server A (backward office).

In a third embodiment of the present invention, the process in a scenario of a BICC backward delay incoming and an SIP outgoing is substantially the same as that in the scenario of the BICC forward delay incoming and the SIP outgoing, and the BICC operates according to the standard process, and the only difference there-between is that the processing of the CMN manner is different. That is, after receiving a 183 message of a forward office, an MSC server adjusts the codec in the received SDP information according to the negotiated codec information, converts the codec into Tunnel information, and sends the Tunnel information and the negotiated codec information to a backward office through an APM message, and meanwhile releases a bearer resource previously created by an SIP side. After receiving the Tunnel information from the backward office, the MSC server converts the Tunnel information into SDP information, and sends the SDP information to the backward office through an UPDATE message, in which the codec information carried in the message is the previously negotiated primary codec, and a 200 FOR UPDATE message of the forward office received later on is not processed.

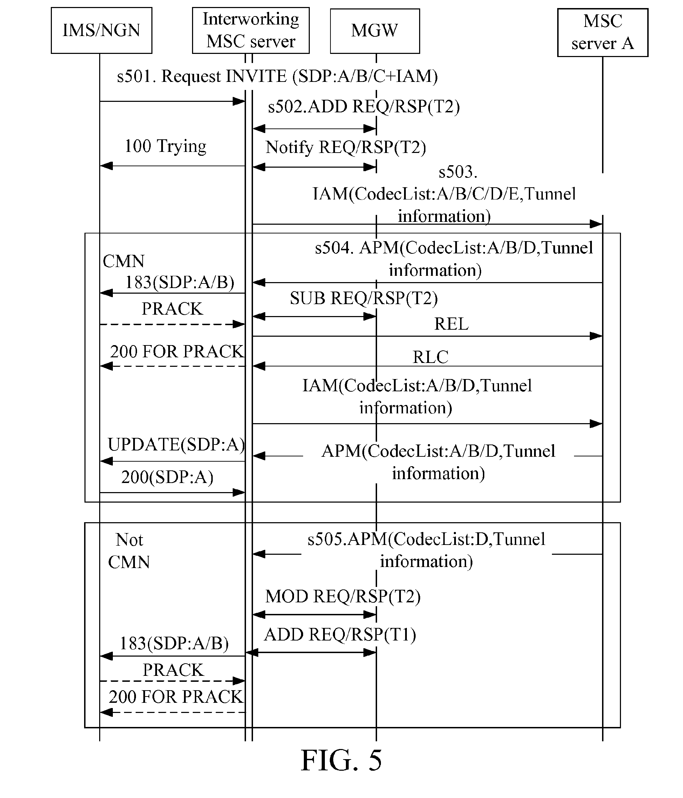

In a fourth embodiment of the present invention, in a scenario of an SIP carrying SDP for incoming and a BICC adopting forward rapid outgoing, as shown in FIG. 5, the method of selecting CMN by an interworking MSC server includes the following steps.

In Step s501, an interworking MSC server receives an INVITE message carrying SDP information from an IMS/NGN network, and buffers the SDP information of the IMS/NGN network (backward office).

In Step s502, the interworking MSC server sends an ADD REQ/RSP (T2) message to an MGW to apply for creating an endpoint T2.

In Step s503, after receiving Tunnel information of the endpoint T2, the interworking MSC server sends an IAM message carrying the Tunnel information and the codec information of a BICC side to an MSC server A (forward office).

In Step s504, after an APM message of the MSC server A (forward office) is received, if the primary codec carried in the message is not included in a codec intersection, it turns to Step s505 for processing. If the primary codec is included in the codec intersection, the BICC releases the endpoint T2 and previously occupied resources through a SUB REQ/RSP (T2) message, adjusts the codec in the previously buffered SDP information according to the negotiated codec information, converts the codec into Tunnel information, and sends the Tunnel information and the negotiated codec information to the MSC server A (forward office) through an IAM message, and performs in the CMN manner.

In Step s505, after receiving an APM message from the MSC server A (forward office), the interworking MSC server modifies properties of the endpoint T2, and sends the codec information and Tunnel information of an opposite office to the MGW through a MOD REQ message. Meanwhile, at the SIP side, as the codec negotiated by the R4 network is not included in the intersection, the SIP selects the codec information carried during the incoming or selects a codec according to a strategy of the MSC server of this office, and applies to the MGW for creating an endpoint T1 (ADD REQ), and after the endpoint T1 is created successfully, sends a 183 message carrying the SDP information including the codec to the backward office.

The scenario not supporting 100Rel is similar to this scenario, and the difference there-between is that the unreliable 18X and the 200 message carry SDP information, and meanwhile, before the call in the CMN manner is established, no UPDATE message is sent for re-negotiation. At this time, it needs to wait for a response, and then a Re-INVITE message is sent for re-negotiation, which will not be described herein, and the same below.

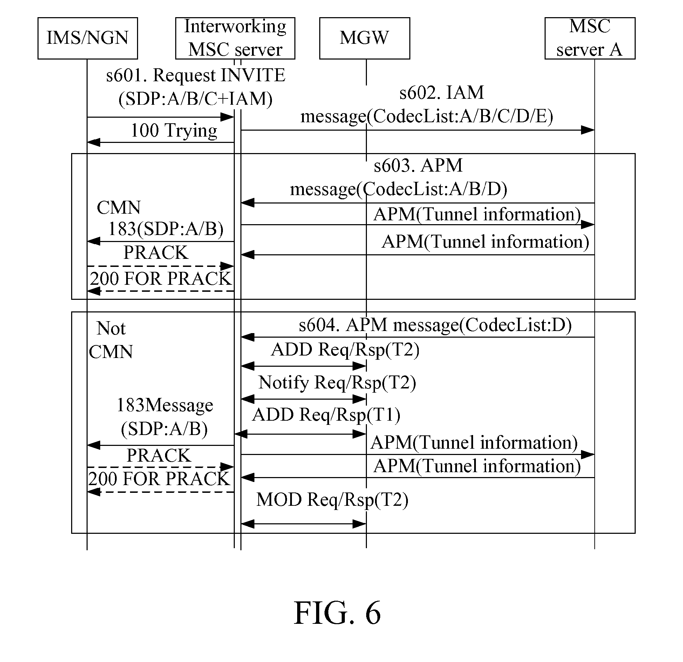

In a fifth embodiment of the present invention, in a scenario of an SIP carrying SDP for incoming and a BICC adopting forward delay outgoing, as shown in FIG. 6, the method of selecting CMN manner by an interworking MSC server includes the following steps.

In Step s601, an interworking MSC server receives an INVITE message carrying SDP information from an IMS/NGN network, and a BICC side buffers the SDP information of the backward office.

In Step s602, the interworking MSC server sends an IAM message carrying codec information to an MSC server A (forward office).

In Step s603, the interworking MSC server receives an APM message from the MSC server A (forward office), and if the primary codec carried in the message is not included in the codec intersection supported by the CS domain and the IMS/NGN network, it turns to Step s604. If the primary codec is included in the codec intersection supported by the CS domain and the IMS/NGN network, the interworking MSC server adjusts the codec in the buffered SDP information according to the negotiated codec information, and converts the codec into Tunnel information, and then sends the Tunnel information to the forward office through an APM message. After the interworking MSC server receives an APM message from the forward office, the SIP is required to convert the Tunnel information into the SDP information according to the negotiated codec information, and send the SDP information to the IMS/NGN through a 183 message.

In Step s604, after receiving the APM message from the MSC server A (forward office), the interworking MSC server adds an endpoint T2 and properties, and sends the codec information and the Tunnel information to the forward office through an APM message. Meanwhile, at the SIP side, as the codec negotiated by the R4 network side is not included in the intersection, the SIP selects the codec information carried during the incoming or selects a codec according to a strategy of the MSC server of this office, and applies to an MGW for creating an endpoint T1 (ADD REQ), and after the endpoint T1 is created successfully, sends a 183 message carrying the SDP information including the codec to the backward office.

In a sixth embodiment of the present invention, the process in a scenario of an SIP carrying SDP for incoming and a BICC adopting backward delay outgoing is similar to that of forward delay, and the only difference there-between lies in the processing of the CMN manner, that is, after a BICC receives an APM message carrying Tunnel information from a forward office, an interworking MSC server converts the Tunnel information and negotiated codec information into SDP information, and sends the SDP information to a backward office through a 183 message, and meanwhile, adjusts the previously buffered SDP information according to the negotiated codec information, and converts the SDP information into corresponding Tunnel information, and then sends the Tunnel information to the forward office through an APM message.

In a seventh embodiment of the present invention, in a scenario of an IMS/NGN SIP/SIP-1 carrying SDP for incoming, and an Nc interface SIP-1 outgoing, the call flow is substantially similar to the previous flow, and the SIP incoming and the SIP outgoing may be processed as a half call model.

In an eighth embodiment of the present invention, in a scenario of an Nc interface SIP-I incoming and an IMS/NGN SIP/SIP-I carrying SDP for outgoing, the outgoing side SIP completes SDP negotiation in INVITE and reliable 18x. This scenario is similar to that of the IMS/NGN SIP/SIP-I carrying SDP for incoming and the Nc interface SIP-I outgoing. The outgoing side SIP completes negotiation in INVITE and 200 messages (an unreliable 18x message carrying SDP information). This scenario is similar to that of the IMS/NGN SIP/SIP-I carrying SDP for incoming and the Nc interface SIP-I outgoing, and the only difference there-between is that the received 18X message and 200 message both carry SDP information, and the other processes are the same and are not described herein. The outgoing side SIP completes negotiation in the INVITE and 200 messages, in which the unreliable 18x message does not carry the SDP information.

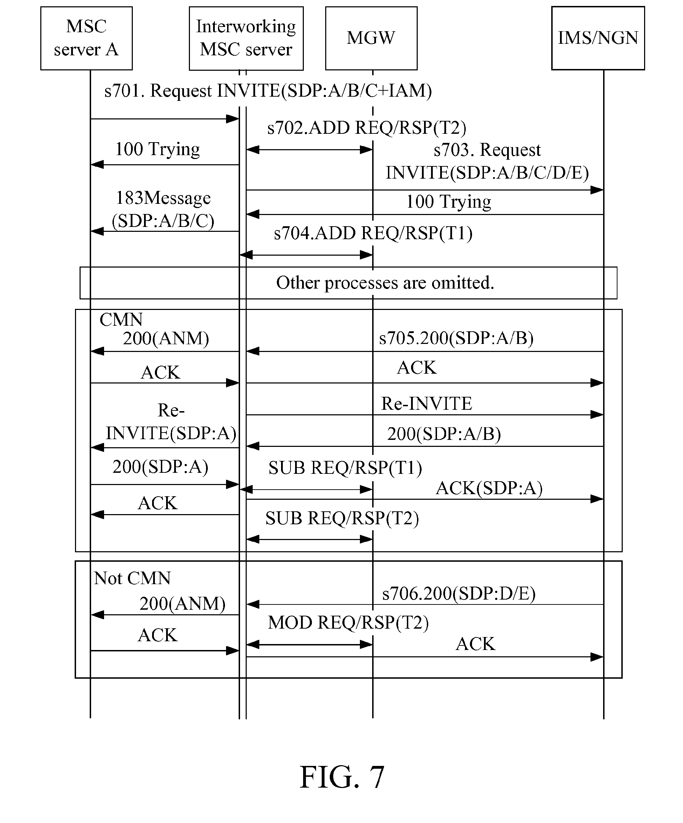

As shown in FIG. 7, the method of selecting CMN by an interworking MSC server includes the following steps.

In Step s701, an interworking MSC server receives an INVITE message sent from an MSC server A.

In Step s702, the interworking MSC server sends an ADD REQ/RSP (T2) message to an MGW to apply for creating an endpoint T2.

In Step s703, after receiving Tunnel information of the endpoint T2, the interworking MSC server sends an INVITE message carrying the Tunnel information and codec information of a BICC side to an IMS/NGN network (forward office).

In Step s704, since an R4 network side does not receive codec information of the IMS/NGN network side, the interworking MSC server adjusts the codec order according to the codec information carried during the incoming or a strategy of this office, and meanwhile applies to the MGW for creating an endpoint T1, and carries the SDP information to the R4 network through a 183 message.

In Step s705, after receiving a 200 response message from the IMS/NGN network (forward office), the interworking MSC server determines whether the primary codec is included in a codec intersection supported by the CS domain and the IMS/NGN network, and if yes, the interworking MSC server sends a Re-INVITE message not carrying the SDP information to the IMS/NGN network, and then after receiving a 200 OK message carrying SDP OFFER from the IMS/NGN network, the interworking MSC server sends a Re-INVITE message carrying the SDP OFFER (the SDP information is the SDP information from the IMS/NGN network) to the forward office.

In Step s706, after the forward office sends back a 200 OK message carrying SDP ANSWER, the interworking MSC server sends the SDP ANSWER information to the IMS/NGN through an ACK message, and meanwhile releases the previously created bearer resource, and sends the ACK message back to the forward office.

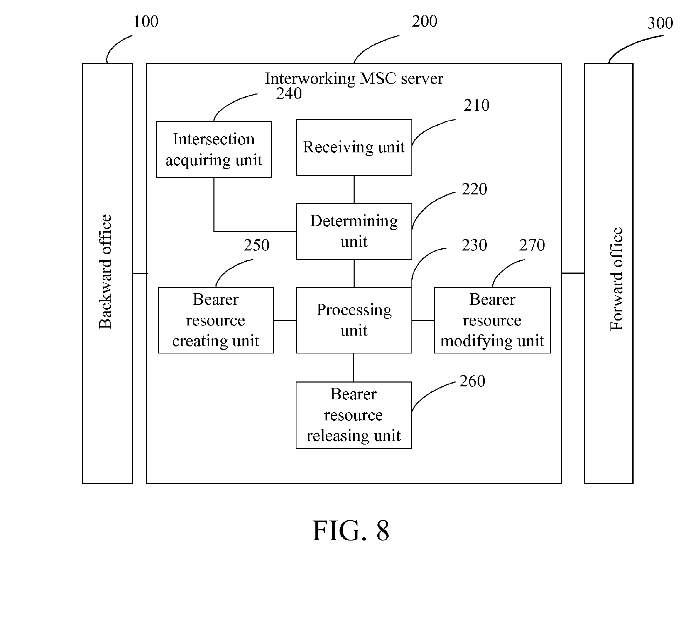

In an embodiment, the present invention provides a system of selecting CMN by an MSC server. As shown in FIG. 8, the system includes a forward office 300 and a backward office 100. The forward office is an IMS or an NGN, and the backward office is another MSC server. The system further includes an interworking MSC server 200, adapted to receive a message carrying SDP sent by the IMS or the NGN, in which the message carries negotiated codec information; and determine whether the codec information is included in a codec intersection of a CS domain and an IMS/NGN domain, and if the codec information is included in the intersection, the CMN manner is adopted.

The interworking MSC server 200 specifically includes: a receiving unit 210, a determining unit 220, a processing unit 230, an intersection acquiring unit 240, a bearer resource creating unit 250, a bearer resource releasing unit 260, and a bearer resource modifying unit 270. The receiving unit 210 is adapted to receive codec information from an SIP side or a BICC side. The determining unit 220 is adapted to determine whether the codec information is included in a codec intersection from the SIP side or the BICC side. The processing unit 230 is adapted to adopt the CMN manner for processing when the codec information is included in the codec intersection from the SIP side or the BICC side. The intersection acquiring unit 240 is adapted to acquire a codec of the CS domain at the BICC side, acquire a codec of the IMS/NGN domain at the SIP side, and take an intersection of the two codecs to get codec intersection information, in which the codec information is acquired from a message sent from the backward office. The bearer resource creating unit 250 is adapted to apply for creating a bearer resource according to negotiated codec information at the SIP side, and select a codec according to the codec information carried during the incoming or a strategy of this office and apply for a bearer resource at the BICC side in a scenario of the BICC forward rapid incoming and the SIP outgoing; and select a codec according to the codec information carried during the incoming or the strategy of this office and apply for a bearer resource at the BICC side in a scenario of the BICC forward delay incoming and the SIP outgoing. The bearer resource releasing unit 260 is adapted to exchange information with the backward office, and release the created bearer resource. The bearer resource modifying unit 270 is adapted to exchange information with the backward office, and modify the created bearer resource.

In an embodiment, the present invention provides a method of selecting whether to adopt CMN manner according to a codec negotiation result. When cross-domain interworking is implemented in an operator network, a method of controlling whether to adopt CMN manner according to the codec negotiation result is introduced to the interworking MSC server. Therefore, the call flow adopting the CMN manner in the cross-domain interworking is specified. Meanwhile, the speech quality is effectively improved by using the CMN, the IP resource in the network is saved, the processing capability of the network is improved, and the IP network delay is reduced, thereby bringing greater benefits to operators and users.

Through the descriptions of the preceding embodiments, those skilled in the art may understand that the present invention may be implemented by hardware only or by software and a necessary universal hardware platform. Based on such understandings, the technical solution under the present invention may be embodied in the form of a software product. The software product may be stored in a nonvolatile storage medium, which can be a Compact Disk Read-Only Memory (CD-ROM), USB flash drive, or a removable hard drive. The software product includes a number of instructions that enable a computer device (personal computer, server, or network device) to execute the methods provided in the embodiments of the present invention.

Although the present invention has been described through several exemplary embodiments, the invention is not limited to such embodiments. Any modification, equivalent replacement, or improvement made without departing from the spirit and principle of the present invention should fall within the scope of the present invention.

## Claims

1. A method of selecting a call mediation node, CMN, by a soft switch device, comprising:
receiving codec information; and
determining whether the codec information is contained in a codec intersection of a forward office and a backward office, and if the codec information is contained in the intersection, selecting a CMN manner for processing.

2. The method of selecting the CMN by the soft switch device according to claim 1, wherein the codec information is acquired from a message sent by the backward office.

3. The method of selecting the CMN by the soft switch device according to claim 1, wherein the codec information is acquired from one of a Session Initial Protocol, SIP, side and a bearer independent call control, BICC, side.

4. The method of selecting the CMN by the soft switch device according to claim 3, wherein the codec information from the SIP side is Session Description Protocol, SDP, information, and the codec information from the BICC side is an application transport message, APM.

5. The method of selecting the CMN by the soft switch device according to any one of claims 1 to 4, wherein
the soft switch device acquires the codec intersection in advance through acquiring a codec of a circuit switch, CS, domain at a CS domain side, acquiring a codec of an SIP domain at an SIP side, and taking an intersection of the two codecs to get codec intersection information.

6. The method of selecting the CMN by the soft switch device according to claim 3, wherein in a scenario of a BICC forward rapid incoming and an SIP outgoing, the method further comprises:
sending the codec information to the backward office through an APM message, if the codec information is contained in a codec intersection of the BICC side and the SIP side.

7. The method of selecting the CMN by the soft switch device according to claim 3, wherein in a scenario of a BICC forward delay or backward delay incoming and an SIP outgoing, the method further comprises:
creating a bearer resource, and if the codec information is contained in a codec intersection of the BICC side and the SIP side, releasing the bearer resource.

8. The method of selecting the CMN by the soft switch device according to claim 7, wherein in the scenario of the BICC forward delay incoming and the SIP outgoing, the selecting the CMN manner for processing further comprises:
sending the codec information to the backward office through an APM message;
receiving an APM message carrying Tunnel information sent by the backward office, converting the Tunnel information and the codec information into SDP information, and sending the SDP information to the forward office through an UPDATE message; and
receiving an UPDATE response message from the forward office, converting the SDP information carried in the UPDATE response message into a Tunnel message, and sending the Tunnel message to the backward office.

9. The method of selecting the CMN by the soft switch device according to claim 7, wherein in the scenario of the BICC backward delay incoming and the SIP outgoing, the selecting the CMN manner for processing further comprises:
sending the codec information and Tunnel information converted from received SDP information to the backward office through an APM message; and
receiving an APM message carrying Tunnel information from the backward office, converting the Tunnel information and the codec information into SDP, and sending the SDP to the forward office through an UPDATE message.

10. The method of selecting the CMN by the soft switch device according to any one of claims 7 to 9, further comprising:
selecting a codec according to one of codec information carried during incoming and a strategy of this office and applying for a bearer resource, if the codec result is not contained in the codec intersection of the BICC side and the SIP side.

11. The method of selecting the CMN by the soft switch device according to claim 3, wherein in a scenario of an SIP or SIP-I incoming and a BICC forward rapid outgoing, the selecting the CMN manner for processing further comprises:
releasing a created bearer resource and a BICC resource; and
initiating a call to the forward office, wherein the call carries SDP information received during incoming and a Tunnel message converted from the codec information.

12. The method of selecting the CMN by the soft switch device according to claim 3, wherein in a scenario of an SIP or SIP-I incoming and a BICC forward delay outgoing, the selecting the CMN manner for processing further comprises:
converting SDP information for incoming into a Tunnel message according to the codec information, and sending the Tunnel message to the backward office; and
receiving an APM message from the backward office, converting Tunnel information into SDP information, and sending the SDP information to the backward office.

13. The method of selecting the CMN by the soft switch device according to claim 3, wherein in a scenario of an SIP or SIP-I incoming and a BICC backward delay outgoing, the selecting the CMN manner for processing further comprises:
converting Tunnel information in an APM message into an SDP message according to the codec information, and sending the SDP message to the backward office; and
receiving an APM message from the backward office, converting SDP information into Tunnel information, and sending the Tunnel information to the forward office.

14. The method of selecting the CMN by the soft switch device according to claim 3, wherein in a scenario of a BICC/SIP-I incoming and one of an SIP and an SIP-I outgoing, the selecting the CMN manner for processing further comprises:
sending a Re-INVITE message not carrying SDP information to the forward office;
receiving a Re-INVITE response message carrying SDP information and transparently transmitting the SDP information to the backward office; and
receiving a Re-INVITE response message carrying the SDP from the backward office, and transparently transmitting the SDP information to the forward office.

15. A system of selecting a call mediation node, CMN, by a soft switch device, comprising: a forward office and a backward office, and further comprising:
an interworking mobile switching center, MSC, server, adapted to receive codec information, and determine whether the codec information is contained in a codec intersection of the forward office and the backward office, and select a CMN manner if the codec information is contained in the intersection.

16. The system of selecting the CMN by the soft switch device according to claim 15, wherein the codec information is acquired from a message sent by the backward office.

17. A soft switch device, comprising:
a receiving unit, adapted to receive codec information from one of a Session Initial Protocol, SIP, side and a bearer independent call control, BICC, side;
a determining unit, adapted to determine whether the codec information is contained in a codec intersection from one of the SIP side and the BICC side;
a processing unit, adapted to select a CMN manner for processing, when the codec information is contained in the codec intersection from one of the SIP side and the BICC side; and
an intersection acquiring unit, adapted to acquire a codec of a circuit switch, CS, domain at the BICC side, acquire a codec of an internet protocol, IP, multimedia subsystem, IMS/next generation network, NGN, domain at the SIP side, and take an intersection of the two codecs to get codec intersection information.

18. The soft switch device according to claim 17, wherein the codec information is acquired from a message sent by a backward office.

19. The soft switch device according to claim 17, further comprising:
a bearer resource creating unit, adapted to apply for creating a bearer resource according to the codec information at the SIP side and select a codec according to one of the codec information carried during incoming and a strategy of this office and apply for a bearer resource at the BICC side in a scenario of a BICC forward rapid incoming and an SIP outgoing; and select a codec according to one of the codec information carried during the incoming and the strategy of this office and apply for a bearer resource at the BICC side in a scenario of a BICC forward delay incoming and an SIP outgoing.

20. The soft switch device according to claim 18, further comprising:
a bearer resource releasing unit, adapted to exchange information with the backward office, and release created bearer resource.

21. The soft switch device according to claim 18, further comprising:
a bearer resource modifying unit, adapted to exchange information with the backward office, and modify created bearer resource.
